# EUROPÄISCHE PATENTSCHRIFT

(11) **EP 1 615 745 B1**
(45) Veröffentlichungstag und Bekanntmachung des Hinweises auf die Patenterteilung: **02.11.2006**
(21) Anmeldenummer: 04724289.6
(22) Anmeldetag: 30.03.2004
(51) Int. Cl.: B23Q 3/155, B23Q 3/157

(54) **WERKZEUGMASCHINE MIT WERKZEUG-MAGAZIN**
MACHINE TOOL HAVING A TOOL MAGAZINE
MACHINE-OUTIL COMPRENANT UN MAGASIN A OUTILS

(30) Priorität: 15.04.2003 DE 20306087 U
(43) Veröffentlichungstag der Anmeldung: 18.01.2006
(73) Patentinhaber: Cross Hüller GmbH, 71636 Ludwigsburg (DE)
(72) Erfinder: CORBEAN, Ioan-Mircea, 71672 Marbach (DE); RUCKWIED, Tobias, 70736 Fellbach (DE); STENGELE, Gerald, 71636 Ludwigsburg (DE)
(74) Vertreter: Rau, Manfred
(86) Internationale Anmeldenummer: PCT/EP2004/003331
(87) Internationale Veröffentlichungsnummer: WO 2004/091852

(56) Entgegenhaltungen:
- EP-A- 1 291 125
- US-A- 5 944 643
- US-A- 6 071 220
- PATENT ABSTRACTS OF JAPAN Bd. 1999, Nr. 09, 30. Juli 1999 (1999-07-30) & JP 11 099427 A (TOYODA MACH WORKS LTD), 13. April 1999 (1999-04-13) in der Anmeldung erwähnt

## Beschreibung

Die Erfindung betrifft eine Werkzeugmaschine nach dem Oberbegriff des Anspruches 1 (siehe, z.B., EP-1 291 125-A).

Aus der JP 11-99 427 A ist eine derartige Werkzeugmaschine bekannt. Bei dieser Werkzeugmaschine ist das Werkzeug-Magazin an einer rückwärtigen Seitenwand angeordnet. Zwischen der die Werkzeuge aufnehmenden Kette und dem Arbeitsraum ist eine Werkzeug-Wechseleinrichtung angebracht, die einen drehbaren Werkzeug-Wechsler aufweist. Dadurch, dass zwischen dem Magazin und dem Arbeitsraum noch die Werkzeug-Wechseleinrichtung angeordnet ist, wird insgesamt die Baubreite der Werkzeugmaschine vergrößert. Dies ist insbesondere dann von großem Nachteil, wenn die Werkzeugmaschine als Doppelspindel-Werkzeugmaschine ausgebildet wird, da in diesem Fall an beiden Seiten jeweils ein solches Werkzeug-Magazin mit einer Werkzeug-Wechseleinrichtung vorgesehen werden muss. Zusätzlich kommt in diesem Falle hinzu, dass der Arbeitsraum der Werkzeugmaschine nicht mehr einsehbar ist.

Aus der DE 195 03 482 C2 (entspr. EP 0 806 998 B1) ist weiterhin eine Werkzeugmaschine der allgemeinen Gattung bekannt, bei der das Werkzeug-Magazin oberhalb des Arbeitsraumes auf dem Gestell der Maschine angeordnet ist. Bei dieser Werkzeugmaschine sind die Aufnahmen der die Werkzeuge aufnehmenden Kette so ausgestaltet, dass die Arbeitsspindel das benutzte Werkzeug direkt in einer leeren Werkzeug-Aufnahme der Kette ablegt und anschließend direkt aus einer mit einem neuen Werkzeug bestückten Werkzeug-Aufnahme der Kette ein neues Werkzeug übernimmt. Bei dieser Anordnung ist der Arbeitsraum zwar einsehbar; die Beladung der Kette mit Werkzeugen ist aber schwierig, da die Bestückungsstelle sehr hoch liegt.

Der Erfindung liegt die Aufgabe zugrunde, eine Werkzeugmaschine der gattungsgemäßen Art so auszugestalten, dass einerseits die Einsehbarkeit des Arbeitsraumes erhalten bleibt und andererseits bei geringstmöglichem Platzaufwand für das Werkzeug-Magazin dessen Bestückung mit neuen Werkzeugen sehr einfach möglich ist.

Diese Aufgabe wird erfindungsgemäß durch die Merkmale im Kennzeichnungsteil des Anspruches 1 gelöst. Der Kern der Erfindung liegt darin, dass einerseits der oberhalb des Arbeitsraums beziehungsweise des Gestells der Werkzeugmaschine vorhandene Raum für das Werkzeug-Magazin ausgenutzt wird, dass aber gleichzeitig auch an einer rückwärtigen Seitenwand ein nach unten gerichteter Schenkel vorhanden ist, in den hinein sich die umlaufend antreibbare Kette hineinerstreckt, so dass die Bedienungsperson sehr bequem und damit effizient einen Austausch von Werkzeugen auf der Kette vornehmen kann.

Die Ansprüche 2 und 3 geben hierfür vorteilhafte Weiterbildungen.

Die Vorteile der erfindungsgemäßen Lösung kommen besonders bei der Ausgestaltung der Werkzeugmaschine nach Anspruch 4 zum Tragen.

Die Ansprüche 5 ff. geben vorteilhafte Ausgestaltungen einer zusammen mit dem Werkzeug-Magazin einzusetzenden Werkzeug-Wechseleinrichtung wieder.

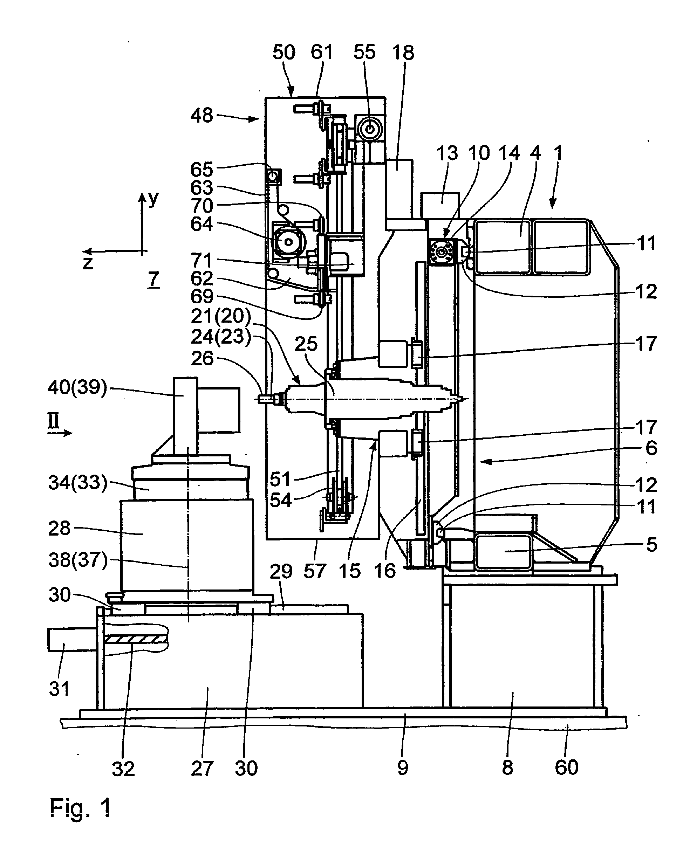

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Seiten-Längs-Ansicht einer Doppelspindel-Werkzeugmaschine,
- Fig. 2: eine Stirnansicht der Werkzeugmaschine entsprechend dem Sichtpfeil II in Fig. 1,

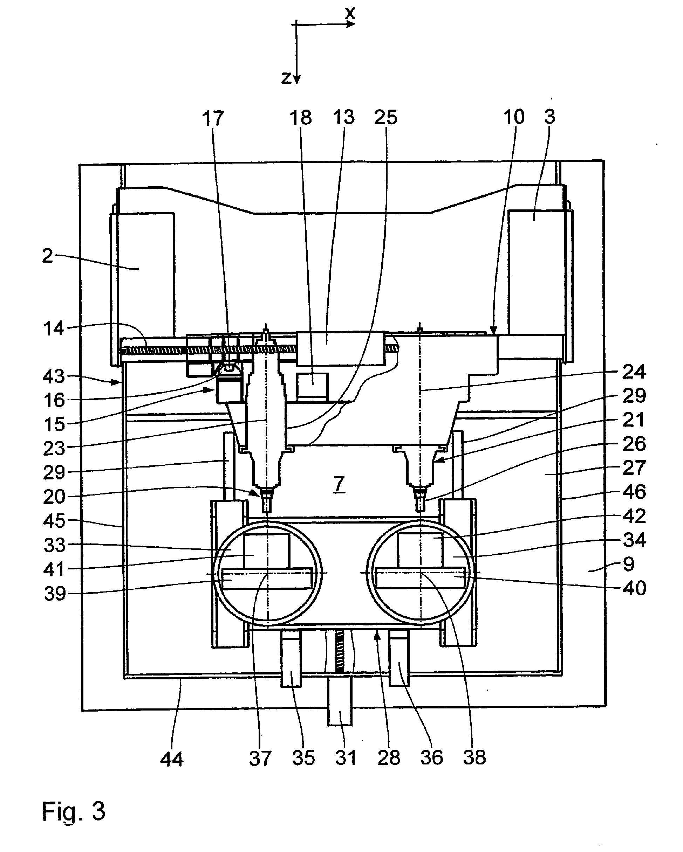

- Fig. 3: eine Draufsicht auf die Werkzeugmaschine gemäß dem Sichtpfeil III in Fig. 1 und

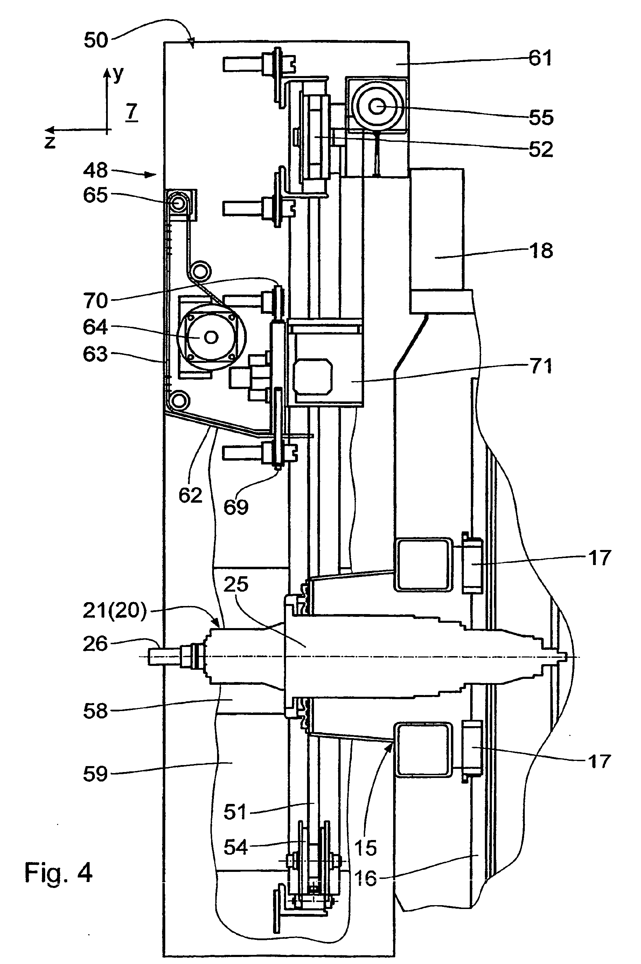

- Fig. 4: eine vergrößerte Teildarstellung aus Fig. 1.

Das in der Zeichnung dargestellte Ausführungsbeispiel einer Doppelspindel-Werkzeugmaschine weist einen - in der horizontalen z-Richtung gesehen - rechteckigen, und zwar etwa quadratischen, durch einen Rahmen gebildeten Ständer 1 auf, der durch sich in y-Richtung erstreckende vertikale Seiten-Stützen 2, 3 und jeweils einen diese verbindenden horizontalen, sich in x-Richtung erstreckenden oberen Quer-Holm 4 beziehungsweise einen unteren Quer-Holm 5 gebildet ist. Die Seiten-Stützen 2, 3 und die Quer-Holme 4, 5 sind durch Hohlprofile gebildet und umschließen einen Innenraum 6, der beidseitig offen ist, und zwar insbesondere zum Arbeitsraum 7 hin. Der Ständer 1 ist über ein Untergestell 8 auf dem Fundament beziehungsweise einer Fundament-Platte 9 abgestützt.

An der dem Arbeitsraum 7 zugewandten Stirnseite des Ständers 1 ist ein ebenfalls rahmenartig ausgebildeter x-Schlitten 10 in x-Richtung verschiebbar angeordnet. Hierzu sind an den Quer-Holmen 4, 5 jeweils eine x-Führungsschiene 11 angebracht, auf denen der x-Schlitten 10 mittels x-Führungs-Schuhen 12 geführt ist. Der Antrieb des x-Schlittens 10 erfolgt mittels eines auf dem x-Schlitten 10 angebrachten x-Motors 13 über eine sich in x-Richtung erstreckende, in den Seiten-Stützen 2, 3 des Ständers 1 drehfest gelagerte x-Kugelrollspindel 14.

Auf der dem Arbeitsraum 7 zugewandten Stirnseite des x-Schlittens ist ein in y-Richtung, also vertikal, verschiebbarer y-Schlitten 15 verschiebbar geführt. Hierzu sind an den Seitenbereichen des rahmenartigen x-Schlittens 10 jeweils eine y-FÜhrungsschiene 16 angebracht, auf denen der y-Schlitten 15 mittels y-Führungs-Schuhen 17 verschiebbar geführt ist. Der Antrieb des y-Schlittens 15 erfolgt mittels eines ebenfalls auf dem x-Schlitten 10 angebrachten y-Motors 18 über eine y-Kugelrollspindel 19.

Auf dem y-Schlitten 15 befinden sich im Abstand voneinander zwei Arbeitsspindeln 20, 21, die sich in z-Richtung erstrecken und nach vorn zum Arbeitsraum 7 hin und nach hinten durch den inneren Freiraum 22 des x-Schlittens 10 in den Innenraum 6 des Ständers 1 hineinragen. Die Arbeitsspindeln 20, 21 sind jeweils um eine sich in z-Richtung erstreckende Achse 23, 24 mittels eines Antriebsmotors 25 antreibbar. Die z-Drehachsen 23, 24 weisen einen Abstand in x-Richtung auf. An ihrer dem Arbeitsraum 7 zugewandten Seite können sie jeweils ein spanendes Werkzeug 26 aufnehmen. Die Arbeitsspindeln 20, 21 sind in x- und y-Richtung relativ zueinander ortsfest auf dem y-Schlitten 15 angebracht, in z-Richtung jedoch unverschiebbar ausgebildet.

Im Arbeitsraum 7 ist vor dem Ständer 1 auf dem Fundament beziehungsweise der Fundament-Platte 9 ein Werkstück-Träger-Bett 27 gelagert, auf dem ein z-Schlitten 28 in z-Richtung verschiebbar gelagert ist. Hierzu sind auf dem Bett 27 z-Führungsschienen 29 angebracht, auf denen der z-Schlitten mittels z-Führungs-Schuhen 30 verschiebbar abgestützt ist. Der Antrieb erfolgt mittels eines am Werkstück-Träger-Bett 27 angebrachten z-Motors 31 über eine z-Kugelrollspindel 32.

Auf dem z-Schlitten 28 sind zwei y-Drehtische 33, 34 angebracht, die jeweils mittels eines am z-Schlitten 28 angebrachten Dreh-Antriebsmotors 35,36 um eine vertikale, also in y-Richtung verlaufende, Drehachse 37, 38 drehantreibbar sind. Die y-Drehachsen 37, 38 haben ebenfalls einen Abstand voneinander.

Auf den y-Drehtischen 33, 34 ist jeweils ein Werkstück-Träger 39, 40 angebracht, der ein zu bearbeitendes Werkstück 41, 42 aufnehmen kann.

Die gleichzeitige Bearbeitung der grundsätzlich identischen Werkstücke 41, 42 mittels eines Werkzeugs 26 erfolgt in der Weise, dass die identischen Bewegungen der Arbeitsspindeln 20, 21 in x- und y-Richtung mittels des x-Schlittens 10 und des y-Schlittens 15 ausgeführt werden. Die insoweit ebenfalls identischen Bewegungen der Werkstücke 41, 42 in z-Richtung werden mittels des z-Schlittens 28 ausgeführt. Lediglich die Bewegungen der Werkstücke 41, 42 um die vertikalen y-Drehachsen 37, 38 werden zwar in der Praxis grundsätzlich auch identisch sein, können aber zumindest theoretisch aufgrund des eigenständigen Drehantriebs der Werkstück-Träger 39, 40 um die y-Drehachsen 37, 38 unterschiedlich sein.

Die Werkzeugmaschine ist von einem nur angedeuteten MaschinenGehäuse 43 umgeben, das insbesondere den Arbeitsraum 7 abdeckt. Es weist eine Stirnwand 44, eine rückwärtige Seitenwand 45 und eine Zugangs-Seitenwand 46 auf. In der Zugangs-Seitenwand 46 befindet sich eine Zugangs-Tür 47 beziehungsweise ein Fenster.

Die Werkzeugmaschine ist mit einem Werkzeugmagazin 48 und einer Werkzeug-Wechseleinrichtung 49 versehen. Das Werkzeug-Magazin 48 weist ein Magazin-Gehäuse 50 auf, das etwa winkel- beziehungsweise L-förmig ausgebildet ist und sich über den Arbeitsraum 7 und außerhalb der rückwärtigen Seitenwand 45 nach unten erstreckt. In dem Magazin-Gehäuse 50 ist weiterhin eine endlose Kette 51 angeordnet, die ebenfalls winkel- beziehungsweise L-förmig über Kettenräder 52, 53, 54 unter weitgehender Ausfüllung des Gehäuses geführt ist. Eines der Kettenräder 53 ist über einen Ketten-Antriebsmotor 55 antreibbar. Die Kette 51 ist mit zahlreichen Werkzeug-Aufnahmen 56 versehen, in die sich waagerecht in z-Richtung erstreckende Werkzeuge 26 eingesetzt werden können.

An einem die rückwärtige Seitenwand 45 überdeckenden unteren Schenkel 57 des Gehäuses 50 ist eine mittels einer Abdeckung 58, beziehungsweise einer Klappe, einer Tür oder eines Rolladens verschließbare Bestückungs-Öffnung 59 ausgebildet, durch die eine Bedienungsperson in normaler stehender Arbeitshaltung Werkzeuge 26 in die Aufnahmen 56 einsetzen beziehungsweise aus diesen herausnehmen kann. Die Bestückungs-Öffnung 59 befindet sich also im unteren Bereich des unteren Schenkels 57 des Gehäuses 50, und zwar in einer Höhe von einem bis zwei Metern über dem Boden 60.

Der obere, waagerechte Schenkel 61 des Gehäuses 50 weist an seiner dem Arbeitsraum 7 zugewandten unteren Seite eine Werkzeug-Wechsel-Öffnung 62 auf, die mittels eines Rolladens 63 verschließbar ist Dieser ist mittels eines Rolladen-Antriebsmotors 64 antreibbar und wird über mehrere im Gehäuse 50 angeordnete Umlenkrollen 65 geführt. Alternativ zu Rolladen können selbstverständlich auch Schiebetüren, Teleskopbleche etc. eingesetzt werden.

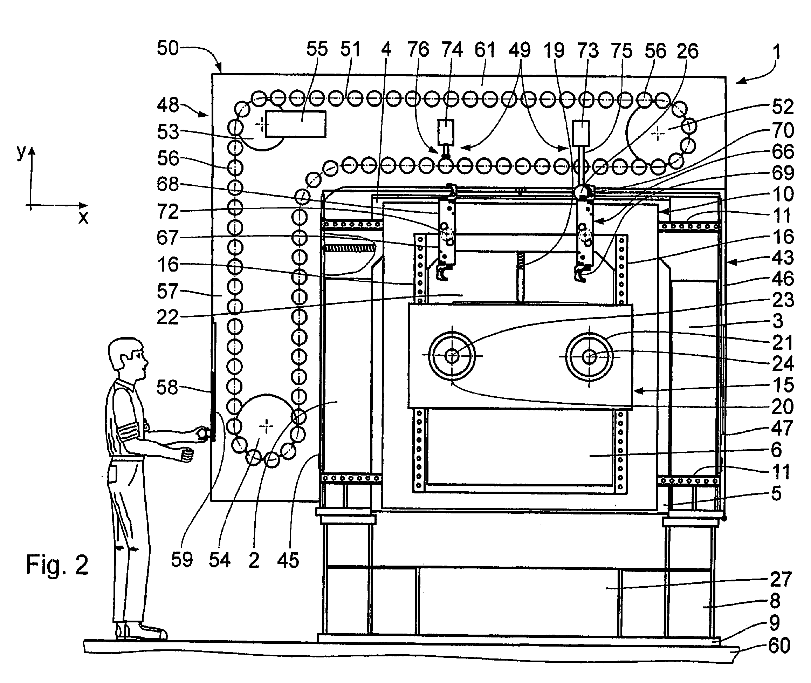

Im oberen Schenkel 61 des Magazin-Gehäuses 50 sind weiterhin zwei die Werkzeug-Wechseleinrichtung 49 bildende Werkzeug-Wechsler 66, 67 angeordnet, die jeweils einen Werkzeug-Wechselarm 68 aufweisen, an dessen beiden Enden jeweils ein Greifer 69, 70 zur Aufnahme eines Werkzeugs angeordnet ist. Die Wechselarme 68 sind jeweils mittig zwischen den beiden Greifern 69, 70 an einem Wechselarm-Antrieb 71 angebracht. Diese Wechselarm-Antriebe 71 sind so ausgestaltet, dass sie zum einen die Werkzeug-Wechselarme 68 um ihre in z-Richtung verlaufende Drehachse 72 drehen und in Richtung der Drehachse 72 verschieben können. Die Werkzeug-Wechsler 66, 67 befinden sich senkrecht über den Arbeitsspindeln 20, 21, wie Fig. 2 entnehmbar ist. Oberhalb der Werkzeug-Wechsler 66, 67 und damit auch senkrecht oberhalb der Arbeitsspindeln 20, 21 befinden sich zwei Übergabe-Einrichtungen 73, 74, die an jeweils einem Werkzeug-Bereitstellungsplatz 75, 76 jeweils ein Werkzeug 26 aus einer Werkzeug-Aufnahme 56 herausnehmen und nach unten verfahren, sodass sie von einem Greifer 69 oder 70 eines Werkzeug-Wechslers 66 beziehungsweise 67 erfasst werden können. Gleichermaßen legen Greifer 69 beziehungsweise 70 eines Werkzeug-Wechslers 66, 67 jeweils ein gebrauchtes Werkzeug 26 in der jeweiligen Übergabeeinrichtung 73, 74 ab, die es zurück zur Werkzeug-Aufnahme 56 des Werkzeug-Magazins 58 bringt. Dies ist in Fig. 2 angedeutet. Grundsätzlich können auch andere Werkzeug-Wechseleinrichtungen eingesetzt werden. Es ist grundsätzlich auch möglich, auf Werkzeug-Wechseleinrichtungen und Übergabe-Einrichtungen zu verzichten, d. h. Werkzeuge direkt aus der Kette zu entnehmen bzw. dort abzulegen. Eine solche Ausgestaltung ist beispielsweise aus der DE 195 03 482 C2 (entspr. EP 0 806 998 B1) bekannt.

Vor dem Werkzeugwechsel befinden sich die Werkzeug-Wechsler 66, 67 in ihrer Ruhelage, d. h. der jeweilige Wechselarm 68 befindet sich in einer waagerechten Ruhelage. Zum Werkzeugwechsel wird der y-Schlitten 15 in eine Wechselposition, in der Regel also nach oben, verfahren. Die Wechselarme 68 mit den Greifern 69 und 70 werden um 90° gedreht, so dass ein Greifer 69 oder 70 ein in einer Werkzeug-Aufnahme 56 befindliches Werkzeug 26 ergreift, während der andere Greifer 70 oder 69 das in der Arbeitsspindel 20 beziehungsweise 21 befindliche auszutauschende Werkzeug 26 ergreift. Danach werden die Wechselarme 68 von dem Wechselarm-Antrieb 71 in Richtung zum z-Schlitten 28 vorgefahren, wodurch die Werkzeuge 26 aus der Arbeitsspindel 20, 21 beziehungsweise der Werkzeug-Aufnahme 56 herausgezogen werden. Im Anschluss daran werden die Wechselarme 68 um 180° gedreht, so dass das aus der Werkzeug-Aufnahme 56 genommene Werkzeug 26 vor der Arbeitsspindel 20 beziehungsweise 21 steht, während das aus der Arbeitsspindel 20 beziehungsweise 21 herausgenommene Werkzeug 26 vor der Werkzeug-Aufnahme 56 sich befindet. Danach werden die Wechselarme 68 mittels des Antriebs 71 in Richtung zum Ständer 1 zurückgefahren, wodurch das neue Werkzeug 26 in die Arbeitsspindel 20, 21 eingesetzt wird, während das ausgetauschte Werkzeug 26 in die Übergabe-Einrichtung 73 bzw. 74 eingesetzt wird. Die Greifer 69, 70 werden geöffnet und geben die beiden Werkzeuge 26 frei. Der jeweilige Wechselarm 68 wird wieder um 90° in seine Ruhelage gedreht. Nach dem Einsetzen der neuen Werkzeuge 26 in die Arbeitsspindeln 20, 21 kann der y-Schlitten 15 bereits wieder in seine Bearbeitungsposition verfahren und das ausgetauschte Werkzeug 26 durch die Übergabe-Einrichtung 73, 74 in die Werkzeug-Aufnahme 56 der Kette 51 eingesetzt werden.

Vor dem Werkzeugwechsel wird die Werkzeug-Wechsel-Öffnung 62 durch entsprechendes Verfahren des Rolladens 62 nach oben geöffnet. Sofort nach Beendigung eines Wechselvorgangs wird die Öffnung 62 wieder verschlossen, so dass keine Späne in das Magazin-Gehäuse 50 fliegen können.

## Patentansprüche

1. Werkzeugmaschine
- mit einem Arbeitsraum (7) mit einem Werkstück-Träger (39, 40),
- mit einer Arbeitsspindel (20, 21),
-- die ein sich in einer z-Richtung erstreckendes Werkzeug (26) auswechselbar aufnimmt und
-- die in einer x-y-Ebene verfahrbar ist, und
- mit einem Werkzeug-Magazin (48), das
-- eine endlose, mit Werkzeug-Aufnahmen (56) versehene, umlaufend antreibbare Kette (51), und
-- eine Bestückungs-Stelle aufweist,
**dadurch gekennzeichnet,**
**dass** das Werkzeug-Magazin (48) winkelförmig mit einem im Wesentlichen waagerechten oberen Schenkel (61) und einem sich nach unten erstreckenden unteren Schenkel (57) ausgebildet ist,
**dass** die Kette (51) sich im Wesentlichen durch beide Schenkel (57, 61) erstreckt und
**dass** die Bestückungs-Stelle (59) im unteren Schenkel (57) vorgesehen ist.

2. Werkzeugmaschine nach Anspruch 1, **dadurch gekennzeichnet,**
**dass** das Werkzeug-Magazin (48) ein Magazin-Gehäuse (50) aufweist, in dessen unterem Schenkel (57) eine Bestückungs-Öffnung (59) ausgebildet ist.

3. Werkzeugmaschine nach Anspruch 2, **dadurch gekennzeichnet,**
**dass** die Bestückungs-Öffnung (59) mit einer bewegbaren Abdeckung (58) versehen ist.

4. Werkzeugmaschine nach einem der Ansprüche 1 bis 3, **dadurch gekennzeichnet,**
**dass** sie als Doppelspindel-Werkzeugmaschine ausgebildet ist.

5. Werkzeugmaschine nach einem der Ansprüche 1 bis 4, **dadurch gekennzeichnet,**
**dass** im Werkzeug-Magazin (48) ein Werkzeug-Bereitstellungsplatz (75, 76) ausgebildet ist.

6. Werkzeugmaschine nach Anspruch 5, **dadurch gekennzeichnet, dass** zwischen dem Werkzeug-Bereitstellungsplatz (75, 76) und der Arbeitsspindel (20, 21) eine Werkzeug-Wechseleinrichtung (49) vorgesehen ist.

7. Werkzeugmaschine nach Anspruch 6, **dadurch gekennzeichnet, dass** die Werkzeug-Wechseleinrichtung (49) als drehbarer Werkzeug-Wechsler (66, 67) mit zwei Greifern (69, 70) zur Aufnahme je eines Werkzeugs (26) ausgebildet ist.

8. Werkzeugmaschine nach Anspruch 6 oder 7, **dadurch gekennzeichnet,**
**dass** zwischen dem Werkzeug-Bereitstellungsplatz (75, 76) und dem Werkzeug-Wechsler (66, 67) eine Übergabe-Einrichtung (73, 74) vorgesehen ist.

9. Werkzeugmaschine nach einem der Ansprüche 6 bis 8, **dadurch gekennzeichnet,**
**dass** die Werkzeug-Wechseleinrichtung (49) oberhalb der Arbeitsspindel (20, 21) angeordnet ist.

10. Werkzeugmaschine nach einem der Ansprüche 1 bis 9, **dadurch gekennzeichnet,**
**dass** der obere Schenkel (61) des Magazin-Gehäuses (50) mit einer verschließbaren Werkzeug-Wechsel-Öffnung (62) versehen ist.

11. Werkzeugmaschine nach Anspruch 10, **dadurch gekennzeichnet,**
**dass** die Werkzeug-Wechsel-Öffnung (62) mittels eines Rolladens (63) verschließbar ist.

## Claims

1. A machine tool, comprising
- a working area (7) with a work carrier (39, 40);
- a tool-holder spindle (20,21),
-- which replaceably accommodates a tool (26) that extends in a z direction, and
-- which is displaceable on an x-y plane; and
- a tool magazine (48) which comprises
-- an endless chain (51) that is circulatorily drivable and provided with tool-holding fixtures (56), and
-- a tool-fitting aperture;
**characterized**
**in that** the tool magazine (48) is angular, having a substantially horizontal top limb (61) and a bottom limb (57) which extends downwards;
**in that** the chain (51) extends substantially through both limbs (57, 61); and
**in that** the tool-fitting aperture (59) is provided in the bottom limb (57).

2. A machine tool according to claim 1, **characterized**
**in that** the tool magazine (48) comprises a magazine housing (50), in the bottom limb (57) of which a tool-fitting aperture (59) is formed.

3. A machine tool according to claim 2, **characterized**
**in that** the tool-fitting aperture (59) is provided with a movable cover (58).

4. A machine tool according to one of claims 1 to 3, **characterized**
**in that** it is a double-spindle machine tool.

5. A machine tool according to one of claims 1 to 4, **characterized**
**in that** a tool-pick-up location (75, 76) is provided in the tool magazine (48).

6. A machine tool according to claim 5, **characterized**
**in that** a tool-change arrangement (49) is provided between the tool-pick-up location (75, 76) and the tool-holder spindle (20, 21).

7. A machine tool according to claim 6, **characterized**
**in that** the tool-change arrangement (49) is a rotatable tool-change device (66, 67) which has two claws (69, 70) for holding a respective tool (26).

8. A machine tool according to claim 6 or 7, **characterized**
**in that** a transfer device (73, 74) is provided between the tool-pick-up location (75, 76) and the tool-change device (66, 67).

9. A machine tool according to one of claims 6 to 8, **characterized**
**in that** the tool-change arrangement (49) is disposed above the tool-holding spindle (20, 21).

10. A machine tool according to one of claims 1 to 9, **characterized**
**in that** the top limb (61) of the magazine housing (50) is provided with a closable tool-change opening (62).

11. A machine tool according to claim 10, **characterized**
**in that** the tool-change opening (62) is closable by a roller shutter (63).

## Revendications

1. Machine-outil
- avec un espace de travail (7) comportant un support pour la pièce à usiner (39, 40),
- avec une broche principale (20, 21)
-- destinée à recevoir de manière interchangeable un outil s'étendant dans une direction z (26) et
-- déplaçable sur un plan x-y
et
- avec un magasin à outils (48) qui présente
-- une chaîne sans fin, munie de logements destinés à recevoir des outils (56), pouvant être entraînée en rotation (51), et
-- un poste d'équipement
**caractérisée en ce que**
le magasin à outils (48) est conçu en forme d'équerre avec une partie supérieure (61) essentiellement horizontale et une partie inférieure (57) orientée vers le bas,
la chaîne (51) s'étend essentiellement sur les deux parties (57, 61) et
le poste d'équipement (59) est prévu dans la partie inférieure (57).

2. Machine-outil selon la revendication 1, **caractérisée en ce que** le magasin à outils (48) présente un caisson (50) dont la partie inférieure (57) comporte une fenêtre d'équipement (59).

3. Machine-outil selon la revendication 2, **caractérisée en ce que** la fenêtre d'équipement (59) est pourvue d'un couvercle de protection amovible (58).

4. Machine-outil selon l'une quelconque des revendications 1 à 3, **caractérisée en ce qu'**elle est conçue comme une machine à deux broches.

5. Machine-outil selon l'une quelconque des revendications 1 à 4, **caractérisée en ce que** le magasin à outils (48) comporte un poste de préparation des outils (75, 76).

6. Machine-outil selon la revendication 5, **caractérisée en ce qu'**un dispositif de changement d'outil (49) est prévu entre le poste de préparation des outils (75, 76) et la broche principale (20,21).

7. Machine-outil selon la revendication 6, **caractérisée en ce que** le dispositif de changement d'outil (49) est conçu comme un changeur d'outil pouvant être pivoté (66, 67) muni de deux griffes (69, 70) pouvant saisir chacune un outil (26).

8. Machine-outil selon la revendication 6 ou 7, **caractérisée en ce qu'**un dispositif de transfert (73, 74) est prévu entre le poste de préparation des outils (75, 76) et le changeur d'outil (66, 67).

9. Machine-outil selon l'une quelconque des revendications 6 à 8, **caractérisée en ce que** le dispositif de changement d'outil (49) est disposé au dessus de la broche principale (20, 21).

10. Machine-outil selon l'une quelconque des revendications 1 à 9, **caractérisée en ce que** la partie supérieure (61) du caisson du magasin (50) est pourvue d'une fenêtre de changement d'outil pouvant être fermée (62).

11. Machine-outil selon la revendication 10, **caractérisée en ce que** la fenêtre de changement d'outil (62) peut être fermée au moyen d'un volet roulant (63).
